(19) Europäisches Patentamt
European Patent Office
Office européen des brevets

(11) EP 4 668 396 A1

(12) EUROPEAN PATENT APPLICATION

(43) Date of publication:
**24.12.2025 Bulletin 2025/52**

(21) Application number: **25183959.3**

(22) Date of filing: **19.06.2025**

(51) International Patent Classification (IPC):
***H01M 10/0525*** *(2010.01)* ***H01M 10/0567*** *(2010.01)*
***H01M 10/0568*** *(2010.01)* ***H01M 10/0569*** *(2010.01)*

(52) Cooperative Patent Classification (CPC):
**H01M 10/0567; H01M 10/0525; H01M 10/0568; H01M 10/0569;** Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.06.2024 CN 202410797972**

(71) Applicant: **Ningde Amperex Technology Ltd.**
**Ningde City, Fujian Province 352100 (CN)**

(72) Inventors:
- **PENG, Xiexue**
**Ningde City, Fujian Province, China, 352100 (CN)**
- **YUE, Pingde**
**Ningde City, Fujian Province, China, 352100 (CN)**
- **LAN, Disheng**
**Ningde City, Fujian Province, China, 352100 (CN)**
- **TANG, Chao**
**Ningde City, Fujian Province, China, 352100 (CN)**

(74) Representative: **Icosa**
**83 avenue Denfert-Rochereau**
**75014 Paris (FR)**

# (54) ELECTROLYTE, SECONDARY BATTERY, AND ELECTRONIC APPARATUS

(57) An electrolyte includes a compound represented by formula I, allowing for its reduction on a surface of a negative electrode plate to form a negative electrode interface protection layer, thereby reducing the side reactions between the negative electrode plate and the electrolyte. Moreover, a nitrogen atom in a pyridyl group of the compound represented by formula I is capable of stabilizing high-valence transition metal elements in a positive electrode plate, reducing the side reactions between the positive electrode plate and the electrolyte, and stabilizing an interface of the positive electrode plate.



Processed by Luminess, 75001 PARIS (FR)

## Description

### TECHNICAL FIELD

This application relates to the field of electrochemical technologies, and in particular, to an electrolyte, a secondary battery, and an electronic apparatus.

### BACKGROUND

Secondary batteries, such as lithium-ion batteries have advantages including high energy density, long cycle life, low self-discharge rate, environmental friendliness, and no pollution, and are widely applied in fields such as aviation, aerospace, marine, and electric vehicles. However, increasingly higher demands are being placed on lithium-ion batteries, particularly regarding cycling performance, which determines the service life of the lithium-ion batteries. Therefore, it is urgent to further improve the cycling performance of the lithium-ion batteries to meet the growing usage demands.

### SUMMARY

This application is intended to provide an electrolyte, a secondary battery, and an electronic apparatus, so as to improve the cycling performance of the secondary battery.

It should be noted that in the invention content of this application, a lithium-ion battery is used as an example of a secondary battery to illustrate this application. However, the secondary battery in this application is not limited to the lithium-ion battery. Specific technical solutions are as follows:

A first aspect of this application provides

an electrolyte, including a compound represented by formula I:

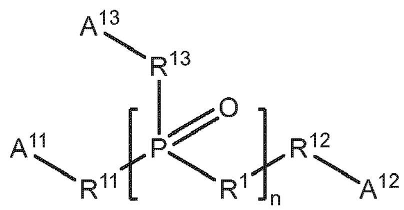

formula I

where the compound represented by formula I comprises at least one pyridyl group; n is selected from 1 or 2; $A^{11}$, $A^{12}$, and $A^{13}$ are each independently selected from hydrogen, substituted or unsubstituted $C_1$-$C_5$ alkyl group, substituted or unsubstituted $C_6$-$C_{10}$ aryl group, and substituted or unsubstituted pyridyl group; $R^1$, $R^{11}$, $R^{12}$, and $R^{13}$ are each independently selected from a covalent single bond, substituted or unsubstituted $C_1$-$C_6$ alkylene group; when substituted, each substituent is independently selected from halogen or $C_1$-$C_3$ alkyl group; and when n is 2, the repeated $R^1$, $R^{13}$, and $A^{13}$ may be the same or different. Introducing the compound represented by formula I into the electrolyte can improve the interface stability of a positive electrode plate and a negative electrode plate, which is conducive to improving the cycling performance of a secondary battery.

In some embodiments of this application, the compound represented by formula I includes at least one of the following compounds:

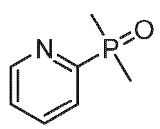

I–1

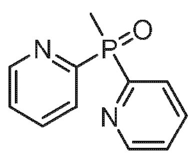

I–2

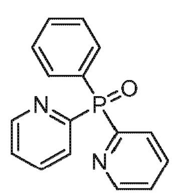

I–3

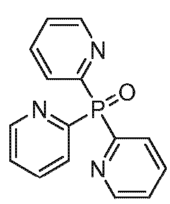

I–4

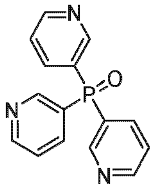
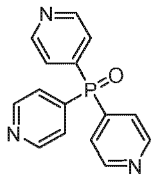
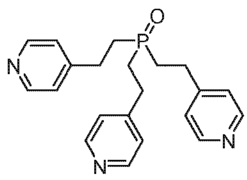
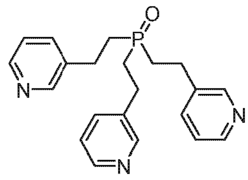

I–5 I–6 I–7 I–8

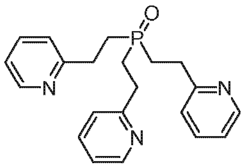
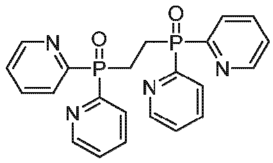
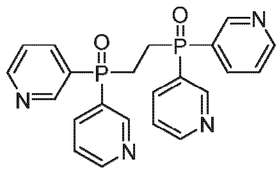

I–9 I–10 I–11

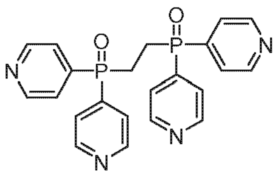
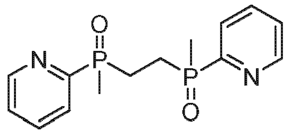
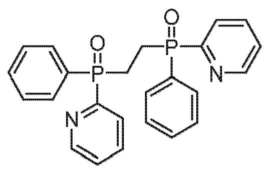

I–12 I–13 I–14

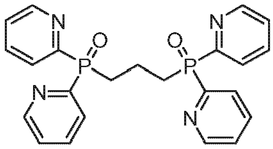
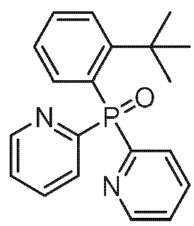
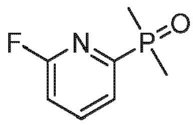

I–15 I–16 I–17.

The foregoing compound represented by formula I is selected, allowing for better stabilization of the interfaces of the positive electrode plate and the negative electrode plate, reducing the side reactions between the positive electrode plate, the negative electrode plate, and the electrolyte, thereby further improving the cycling performance of the secondary battery.

In some embodiments of this application, based on a mass of the electrolyte, a mass percentage of the compound represented by formula I is 0.08% to 1%. By regulating the mass percentage of the compound represented by formula I within the foregoing range, the cycling performance of the secondary battery can be improved, and the secondary battery also has good charging and discharging performance.

In some embodiments of this application, the electrolyte further includes a compound represented by formula II:

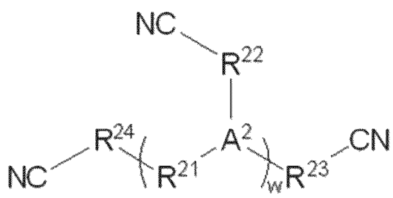

formula II

where w is an integer selected from 0 to 4; $A^2$ is selected from

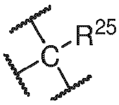,

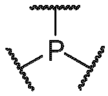, or 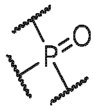;

$R^{21}$, $R^{22}$, $R^{23}$, and $R^{24}$ are each independently selected from a covalent single bond, $C_1$-$C_5$ alkylene group, $C_2$-$C_4$ alkenylene group, or

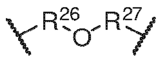;

$R^{25}$ is selected from hydrogen, cyano, unsubstituted or cyano-substituted $C_1$-$C_3$ alkyl group; $R^{26}$ and $R^{27}$ are each independently selected from a covalent single bond or $C_1$-$C_3$ alkylene group; 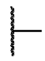 represents a binding site with an adjacent atom; and when w is an integer selected from 2 to 4, the repeated $A^2$, $R^{21}$, and $R^{22}$ may be the same or different; and

based on a total mass of the electrolyte, a mass percentage of the compound represented by formula II is 0.1% to 5%. In addition to the compound represented by formula I, the compound represented by formula II is also introduced to the electrolyte, the mass percentage of the compound represented by formula II is regulated within the foregoing range, and the compound represented by formula I and the compound represented by formula II form the synergistic effect, the cycling performance of the secondary battery can be further improved, and the secondary battery also has good kinetic performance.

In some embodiments of this application, the compound represented by formula II includes at least one of the following compounds:

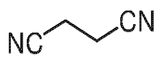
II–1

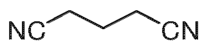
II–2

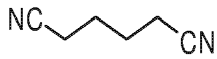
II–3

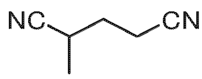
II–4

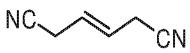
II–5

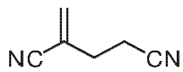
II–6

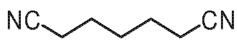
II–7

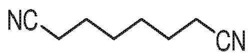
II–8

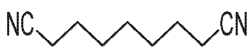
II–9

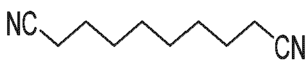
II–10

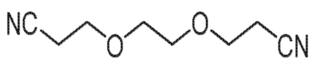
II–11

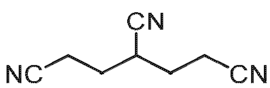
II–12

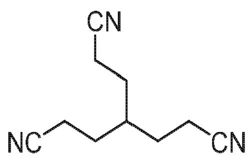
II–13

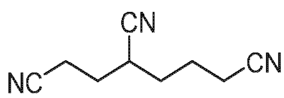
II–14

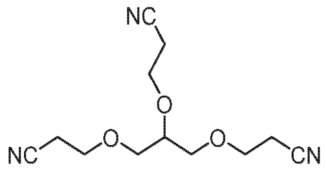

II–15

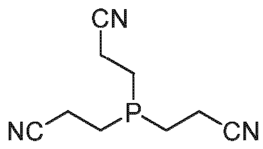

II–16

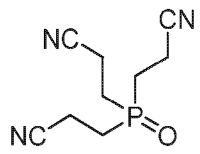

II–17

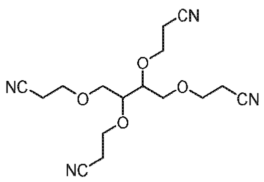

II–18

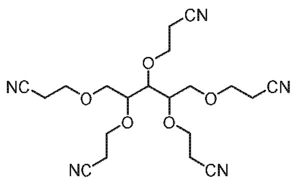

II–19

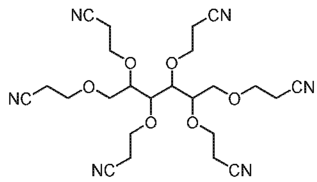

II–20

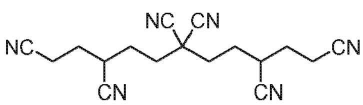

II–21

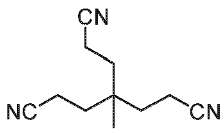

II–22

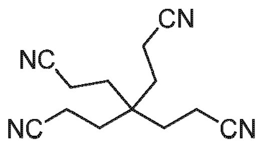

II–23.

Selecting the foregoing compound represented by formula II can better form the synergistic effect with the compound represented by formula I, further suppressing the decomposition of the electrolyte, and better improving the cycling performance of the secondary battery.

In some embodiments of this application, a ratio of the mass percentage of the compound represented by formula I to the mass percentage of the compound represented by formula II is $W_I$, meeting $0.016 \le W_I \le 1$, preferably $0.05 \le W_I \le 1$. By regulating the ratio $W_I$ within the foregoing range, it is more conducive to the synergistic effect between the compound represented by formula I and the compound represented by formula II. The secondary battery can have further improved cycling performance, and the secondary battery also has good kinetic performance.

In some embodiments of this application, the electrolyte further includes a compound represented by formula III:

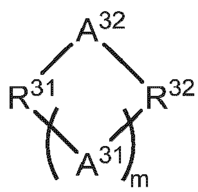

formula III

where $A^{31}$ and $A^{32}$ are each independently selected from

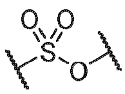

or

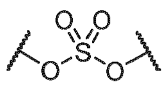 ;

and

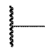

represents a binding site with an adjacent atom;

m is selected from 0 or 1; $R^{31}$ and $R^{32}$ are each independently selected from a covalent single bond, halogen-substituted or unsubstituted $C_1$-$C_5$ alkylene group or halogen-substituted or unsubstituted $C_2$-$C_5$ alkenylene group; and

based on the total mass of the electrolyte, a mass percentage of the compound represented by formula III is 0.1% to 5%. In addition to the compound represented by formula I, the compound represented by formula III is also introduced to the electrolyte, the mass percentage of the compound represented by formula III is regulated within the foregoing range, and the compound represented by formula I and the compound represented by formula III form the combined effect, the cycling performance of the secondary battery can be further improved, and the secondary battery also has good kinetic performance.

In some embodiments of this application, the compound represented by formula III includes at least one of the following compounds:

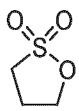
III–1
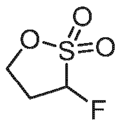
III–2
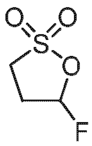
III–3
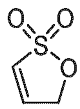
III–4
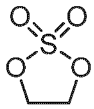
III–5
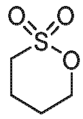
III–6
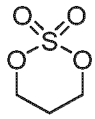
III–7

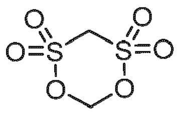
III–8
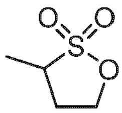
III–9
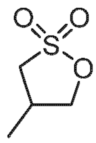
III–10
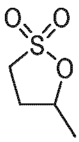
III–11
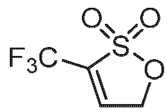
III–12.

Selecting the foregoing compound represented by formula III can better form the synergistic effect with the compound represented by formula I, further reduce the side reactions between the electrolyte and a positive electrode and the side reactions between the electrolyte and a negative electrode, and better improve the cycling performance of the secondary battery.

In some embodiments of this application, the electrolyte further includes a compound represented by formula IV:

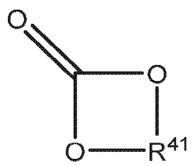

formula IV

where $R^{41}$ is selected from substituted $C_1$-$C_6$ alkylene group, substituted or unsubstituted $C_2$-$C_6$ alkenylene group; and when substituted, the substituent is selected from an F atom or $C_2$-$C_6$ alkenyl group; and

based on the total mass of the electrolyte, a mass percentage of the compound represented by formula IV is 0.1% to 15%. In addition to the compound represented by formula I, the compound represented by formula IV is also introduced to the electrolyte, the mass percentage of the compound represented by formula IV is regulated within the foregoing range, and the compound represented by formula I and the compound represented by formula IV form the synergistic effect, the secondary battery can have further improved cycling performance, and the secondary battery also has good high-temperature storage performance and suitable impedance.

In some embodiments of this application, the compound represented by formula IV includes at least one of the following compounds:

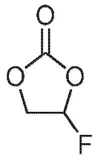
IV-1

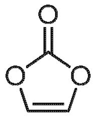
IV-2

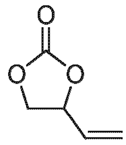
IV-3

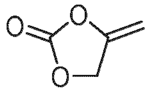
IV-4

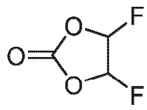
IV-5

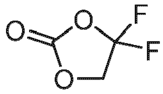
IV-6

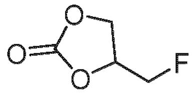
IV-7

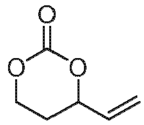
IV-8

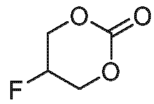
IV-9

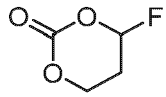
IV-10.

Selecting the foregoing compound represented by formula IV can better form the synergistic effect with the compound represented by formula I, and further decrease the risk of the impedance increase due to the accumulation of by-products during the cycling process, thereby better improving the cycling performance of the secondary battery.

In some embodiments of this application, the electrolyte further includes a boron-containing lithium salt, the boron-containing lithium salt including at least one of lithium tetrafluoroborate, lithium bis(oxalato)borate, or lithium difluorooxalate borate; and based on the total mass of the electrolyte, a mass percentage of the boron-containing lithium salt being 0.01% to 1%. In addition to the compound represented by formula I, the boron-containing lithium salt is also introduced to the electrolyte, a mass percentage of the boron-containing lithium salt is regulated within the foregoing range, so that the risk of the impedance increase due to the accumulation of by-products during the cycling process can be decreased, and higher economic efficiency is further achieved.

A second aspect of this application provides a secondary battery, including the electrolyte according to any one of the foregoing embodiments. Therefore, the secondary battery provided in this application has good cycling performance.

A third aspect of this application provides an electronic apparatus, including the secondary battery according to any one of the foregoing embodiments. Therefore, the electronic apparatus provided in this application has good use performance.

This application has the following beneficial effects:

This application provides an electrolyte, a secondary battery, and an electronic apparatus. The electrolyte includes a compound represented by formula I, allowing for its reduction on a surface of a negative electrode plate to form a negative electrode interface protection layer, thereby reducing the side reactions between the negative electrode plate and the electrolyte. Moreover, a nitrogen atom in a pyridyl group of the compound represented by formula I is capable of stabilizing high-valence transition metal elements in a positive electrode plate, reducing the side reactions between the positive electrode plate and the electrolyte, and stabilizing an interface of the positive electrode plate. Therefore, the interfaces of the positive electrode plate and the negative electrode plate are both stabilized, which is conducive to improving the cycling performance of a secondary battery.

Certainly, when any one of the products or methods of this application is implemented, all advantages described above are not necessarily demonstrated all at the same time.

## DESCRIPTION OF EMBODIMENTS

The following clearly and completely describes the technical solutions in some embodiments of this application. Apparently, the described embodiments are only some rather than all of these embodiments of this application. All other embodiments obtained by persons skilled in the art based on this application shall fall within the protection scope of this application.

It should be noted that, in the specific embodiments of this application, a lithium-ion battery is used as an example of a secondary battery to illustrate this application. However, the secondary battery in this application is not limited to the lithium-ion battery. Specific technical solutions are as follows:

A first aspect of this application provides an electrolyte, including a compound represented by formula I:

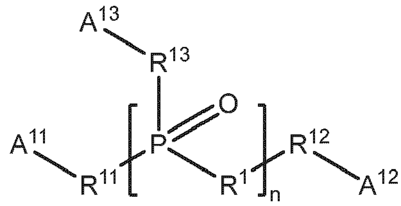

formula I

where the compound represented by formula I contains at least one pyridyl group; n is selected from 1 or 2; $A^{11}$, $A^{12}$, and $A^{13}$ are each independently selected from hydrogen, substituted or unsubstituted $C_1$-$C_5$ alkyl group, substituted or unsubstituted $C_6$-$C_{10}$ aryl group, and substituted or unsubstituted pyridyl group; $R^1$, $R^{11}$, $R^{12}$, and $R^{13}$ are each independently selected from a covalent single bond, substituted or unsubstituted $C_1$-$C_6$ alkylene group; and when substituted, each substituent is independently selected from halogen or $C_1$-$C_3$ alkyl group. When n is 2, the repeated $R^1$, $R^{13}$, and $A^{13}$ may be the same or different. To be specific, when two $R^1$ groups are present, the two $R^1$ groups may be the same or different; when two $R^{13}$ groups are present, the two $R^{13}$ groups may be the same or different; and when two $A^{13}$ groups are present, the two $A^{13}$ groups may be the same or different. In this application, the $C_6$-$C_{10}$ aryl group may be selected from phenyl group; the $C_1$-$C_6$ alkylene group may be selected from methylene group, ethylene group, propylene group, butylene group, pentylidene group, and hexylidene group; halogen may be selected from fluorine, chlorine, bromine, and iodine; and the $C_1$-$C_3$ alkyl group may be selected from methyl group, ethyl group, and propyl group.

The compound represented by formula I is introduced into the electrolyte, allowing for its reduction on a surface of a negative electrode plate to form a negative electrode interface protection layer, thereby reducing the side reactions between the negative electrode plate and the electrolyte. Moreover, a nitrogen atom in the pyridyl group of the compound represented by formula I is capable of stabilizing high-valence transition metal elements in a positive electrode plate, reducing the side reactions between the positive electrode plate and the electrolyte, and stabilizing an interface of the positive electrode plate. Therefore, the interfaces of the positive electrode plate and the negative electrode plate are both stabilized, which is conducive to improving the cycling performance of a secondary battery.

In some embodiments of this application, the compound represented by formula I includes at least one of the following compounds:

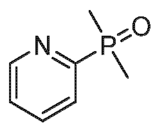

I-1

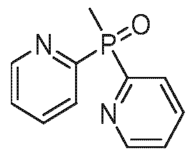

I-2

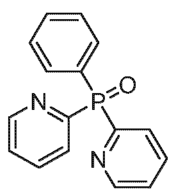

I-3

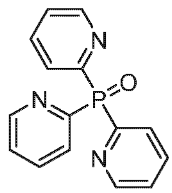

I-4

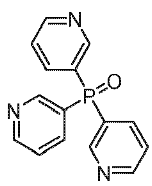

I-5

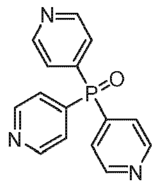

I-6

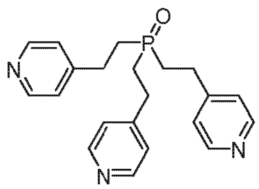

I-7

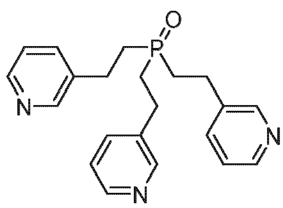

I-8

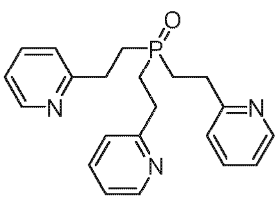

I-9

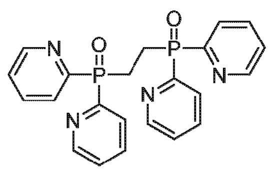

I-10

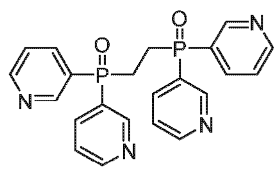

I-11

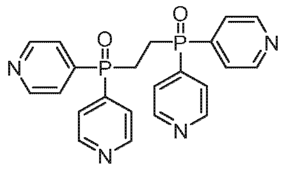
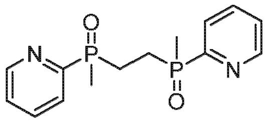
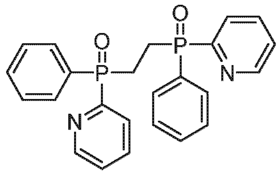

I–12 I–13 I–14

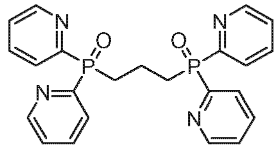
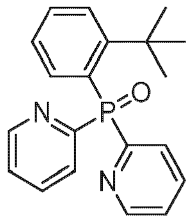
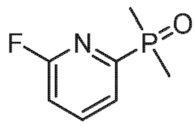

I–15 I–16 I–17.

In the foregoing compounds I-10 to I-15, n=2. In compounds I-10 to I-13 and I-15, the two repeated $R^1$ groups are different, and the two $R^{13}$ groups and the two $A^{13}$ groups are the same. In compound I-14, the two repeated $R^1$ groups and the two $A^{13}$ groups are respectively different, and the two $R^{13}$ groups are the same.

The foregoing compound represented by formula I is selected, allowing for better stabilization of the interfaces of the positive electrode plate and the negative electrode plate, reducing the side reactions between the positive electrode plate, the negative electrode plate, and the electrolyte, thereby further improving the cycling performance of the secondary battery.

In some embodiments of this application, based on a mass of the electrolyte, a mass percentage W1 of the compound represented by formula I is 0.08% to 1%. For example, the mass percentage W1 of the compound represented by formula I may be 0.08%, 0.09%, 0.1%, 0.2%, 0.3%, 0.4%, 0.5%, 0.6%, 0.7%, 0.8%, 0.9%, and 1%, or in a range defined by any two of these values. By regulating the mass percentage W1 of the compound represented by formula I within the foregoing range, the cycling performance of the secondary battery can be improved, the interfaces of the positive electrode plate and the negative electrode plate can be better stabilized, and the side reactions between the positive electrode plate and the electrolyte and the side reactions between the negative electrode plate and the electrolyte can be reduced. Moreover, a positive electrode interface and a negative electrode interface each have suitable impedance, so that the obtained secondary battery also has good charging and discharging performance.

In some embodiments of this application, the electrolyte further includes a compound represented by formula II:

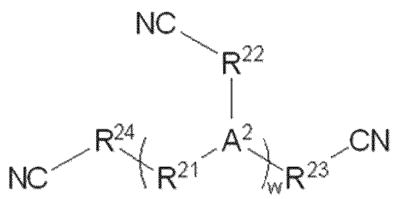

formula II

where w is an integer selected from 0 to 4, to be specific, w may be 0, 1, 2, 3, or 4. $A^2$ is selected from

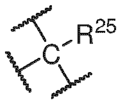 , 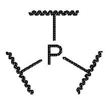 , or 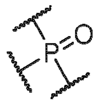 ;

$R^{21}$, $R^{22}$, $R^{23}$, and $R^{24}$ are each independently selected from a covalent single bond, $C_1$-$C_5$ alkylene group, $C_2$-$C_4$ alkenylene group, or

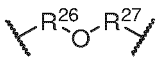 ;

$R^{25}$ is selected from hydrogen, cyano, unsubstituted or cyano-substituted $C_1$-$C_3$ alkyl group; $R^{26}$ and $R^{27}$ are each independently selected from a covalent single bond or $C_1$-$C_3$ alkylene group; and

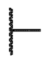

represents a binding site with an adjacent atom; and when w is an integer selected from 2 to 4, and the repeated $A^2$, $R^{21}$, and $R^{22}$ may be the same or different. To be specific, when a plurality of $A^2$ groups are present, the plurality of $A^2$ groups may be the same or different; when a plurality of $R^{21}$ groups are present, the plurality of $R^{21}$ groups may be the same or different; and when a plurality of $R^{22}$ groups are present, the plurality of $R^{22}$ groups may be the same or different.

In this application, the $C_1$-$C_5$ alkylene group may be selected from methylene group, ethylene group, propylene group, butylene group, and pentylidene group; the $C_2$-$C_4$ alkenylene group may be selected from vinylene group, propenylene group, and butenylene group; $C_1$-$C_3$ alkyl group may be selected from methyl group, ethyl group, and propyl group; and the $C_1$-$C_3$ alkylene group may be selected from methylene group, ethylene group, and propylene.

Based on a total mass of the electrolyte, a mass percentage W2 of the compound represented by formula II is 0.1% to 5%. For example, the mass percentage W2 of the compound represented by formula II may be 0.1%, 0.5%, 1%, 1.5%, 2%, 2.5%, 3%, 3.5%, 4%, 4.5%, and 5%, or in a range defined by any two of these values. In addition to the compound represented by formula I, the compound represented by formula II is also introduced to the electrolyte. The compound represented by formula II is capable of stabilizing the high-valence transition metal elements in the positive electrode plate, reducing the side reactions between the positive electrode plate and the electrolyte, and stabilizing the interface of the positive electrode plate. Therefore, the compound represented by formula I and the compound represented by formula II form the synergistic effect to suppress the decomposition of the electrolyte, further improving the cycling performance of the secondary battery. In addition, by regulating the mass percentage W2 of the compound represented by formula II within the foregoing range, the electrolyte also has suitable viscosity and high economic efficiency. Therefore, introducing the compound represented by formula II at the foregoing percentage into the electrolyte can further improve the cycling performance of the secondary battery, also allow the secondary battery to have good kinetic performance, and further achieve higher economic efficiency while improving the performance of the secondary battery.

In some embodiments of this application, the compound represented by formula II includes at least one of the following compounds:

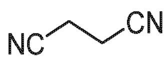
II-1

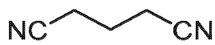
II-2

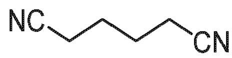
II-3

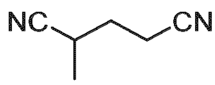
II-4

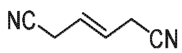
II-5

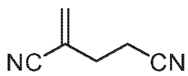
II-6

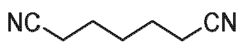
II-7

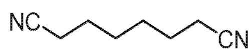
II-8

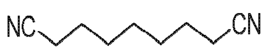
II-9

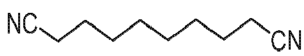
II-10

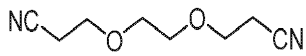
II-11

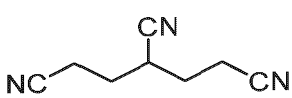
II-12

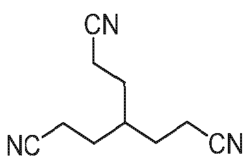
II-13

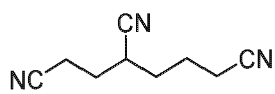
II-14

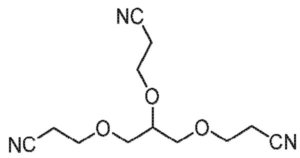
II–15

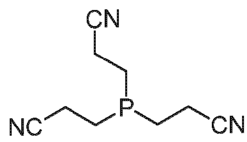
II–16

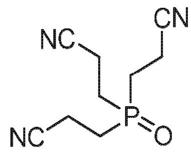
II–17

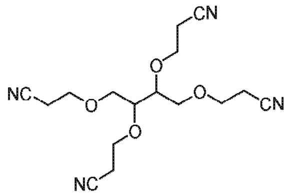
II–18

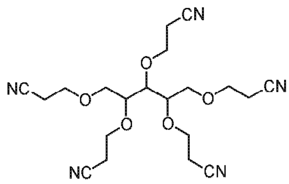
II–19

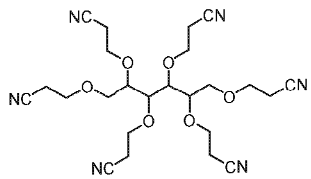
II–20

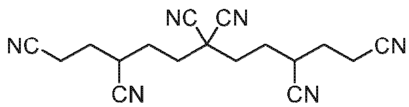
II–21

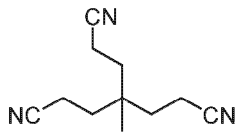
II–22

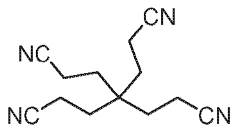
II–23.

In the foregoing compounds II-18 to II-20, w is 2, 3, and 4 in sequence, and the plurality of repeated $A^2$ groups, $R^{21}$ groups, and $R^{22}$ groups are the same. In compound II-21, w=3, the three repeated $R^{21}$ groups and $R^{22}$ groups are the same, and the three $A^2$ groups are different.

Selecting the foregoing compound represented by formula II can better form the synergistic effect with the compound represented by formula I, further suppressing the decomposition of the electrolyte, and better improving the cycling performance of the secondary battery.

In some embodiments of this application, a ratio of the mass percentage of the compound represented by formula I to the mass percentage of the compound represented by formula II is $W_I$, meeting $0.016 \leq W_I \leq 1$, preferably $0.05 \leq W_I \leq 1$. For example, $W_I$ may be 0.016%, 0.02%, 0.05%, 0.1%, 0.2%, 0.3%, 0.4%, 0.5%, 0.6%, 0.7%, 0.8%, 0.9%, and 1%, or in a range defined by any two of these values. By regulating the ratio $W_I$ of a mass percentage of the compound represented by formula I to the mass percentage of the compound represented by formula II within the foregoing range, it is more conducive to the synergistic effect between the compound represented by formula I and the compound represented by formula II, suppressing the continuous decomposition of the electrolyte during a cycling process of the secondary battery. Moreover, with the two compounds matching each other, the electrolyte has suitable viscosity, so that the secondary battery can have further improved cycling performance, and the secondary battery also has good kinetic performance.

In some embodiments of this application, the electrolyte further includes a compound represented by formula III:

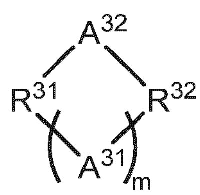
formula III

where $A^{31}$ and $A^{32}$ are each independently selected from

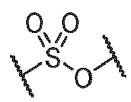

or

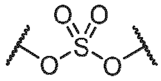 ;

and

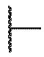

represents a binding site with an adjacent atom; and

m is selected from 0 or 1; $R^{31}$ and $R^{32}$ are each independently selected from a covalent single bond, halogen-substituted or unsubstituted $C_1$-$C_5$ alkylene group or halogen-substituted or unsubstituted $C_2$-$C_5$ alkenylene group. In this application, the $C_1$-$C_5$ alkylene group may be selected from methylene group, ethylene group, propylene group, butylene group, and pentylidene group; the $C_2$-$C_5$ alkenylene group may be selected from methylene group, ethylene group, propylene group, butylene group, and pentylidene group; and halogen may be selected from fluorine, chlorine, bromine, and iodine.

Based on the total mass of the electrolyte, a mass percentage W3 of the compound represented by formula III is 0.1% to 5%. For example, the mass percentage W3 of the compound represented by formula III may be 0.1%, 0.5%, 1%, 1.5%, 2%, 2.5%, 3%, 3.5%, 4%, 4.5%, and 5%, or in a range defined by any two of these values. In addition to the compound represented by formula I, the compound represented by formula III is also introduced into the electrolyte. Because the compound represented by formula III has strong oxidation resistance, the stability of the positive electrode interface can be further improved, and the side reactions between a positive electrode and the electrolyte is reduced. In addition, a protection film can also be formed on a surface of a negative electrode, the stability of the negative electrode interface can be further improved, and thus the side reactions between the negative electrode and the electrolyte are reduced. Therefore, through the combined action of the compound represented by formula I and the compound represented by formula III, the cycling performance of the secondary battery can be further improved. In addition, by regulating the mass percentage W3 of the compound represented by formula III within the foregoing range, the electrolyte also has suitable viscosity and high economic efficiency. Therefore, introducing the compound represented by formula III at the foregoing percentage into the electrolyte can further improve the cycling performance of the secondary battery, also allow the secondary battery to have good kinetic performance, and achieve higher economic efficiency while improving the performance of the secondary battery.

In some embodiments of this application, the compound represented by formula III includes at least one of the following compounds:

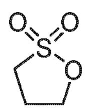 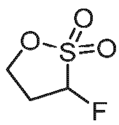 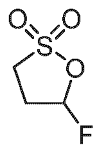 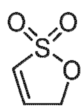 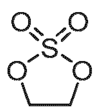 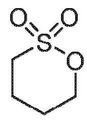 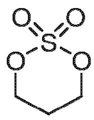

III–1 III–2 III–3 III–4 III–5 III–6 III–7

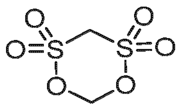 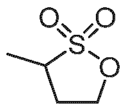 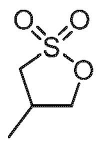 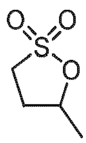 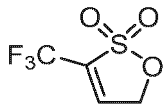

III–8 III–9 III–10 III–11 III–12.

Selecting the foregoing compound represented by formula III can better form the synergistic effect with the compound represented by formula I, further reduce the side reactions between the electrolyte and the positive electrode and the side reactions between the electrolyte and the negative electrode, and better improve the cycling performance of the secondary battery.

In some embodiments of this application, the electrolyte further includes a compound represented by formula IV:

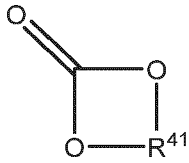

formula IV

where $R^{41}$ is selected from substituted $C_1$-$C_6$ alkylene group, substituted or unsubstituted $C_2$-$C_6$ alkenylene group; and when substituted, the substituent is selected from an F atom or $C_2$-$C_6$ alkenyl group. In this application, the $C_1$-$C_6$ alkylene group may be selected from methylene group, ethylene group, propylene group, butylene group, pentylidene group, and hexylidene group; the $C_2$-$C_6$ alkenylene group may be selected from vinylene group, propenylene group, butenylene group, pentenylene group, and hexenylene group; and $C_2$-$C_6$ alkenyl group may be selected from vinyl group, propenyl group, butenyl group, pentenyl group, and hexenyl group.

Based on the total mass of the electrolyte, a mass percentage W4 of the compound represented by formula IV is 0.1% to 15%. For example, the mass percentage W4 of the compound represented by formula IV may be 0.1%, 0.5%, 1%, 2%, 3%, 4%, 5%, 6%, 7%, 8%, 9%, 10%, 11%, 12%, 13%, 14%, and 15%, or in a range defined by any two of these values. In addition to the compound represented by formula I, the compound represented by formula IV is also introduced into the electrolyte. The synergy effect between the compound represented by formula I and the compound represented by formula IV can enhance the flexibility and stability of a negative electrode solid electrolyte interface film, can enhance the protection of a negative electrode active material, and reduce the probability of contact between the negative electrode active material and the electrolyte. Consequently, the side reactions between the negative electrode active material and the electrolyte are reduced, thereby decreasing the risk of the impedance increase due to the accumulation of by-products during the cycling process. As a result, the cycling performance of the secondary battery can be further improved. Simultaneously, by regulating the mass percentage W4 of the compound represented by formula IV within the foregoing range, the impedance and high-temperature storage performance of the secondary battery can also be considered. Therefore, introducing the compound represented by formula IV at the foregoing percentage into the electrolyte can further improve the cycling performance of the secondary battery, also allow the secondary battery to have good high-temperature storage performance and suitable impedance, and achieve higher economic efficiency while improving the performance of the secondary battery.

In some embodiments of this application, the compound represented by formula IV includes at least one of the following compounds:

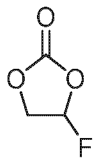
IV–1

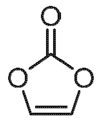
IV–2

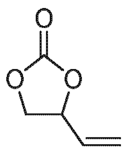
IV–3

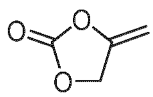
IV–4

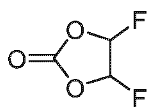
IV–5

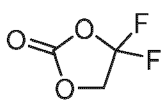
IV–6

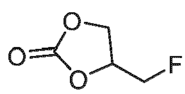
IV–7

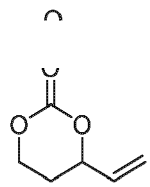
IV–8

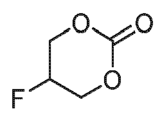
IV–9

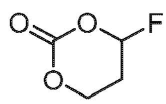
IV–10.

Selecting the foregoing compound represented by formula IV can better form the synergistic effect with the compound represented by formula I, and further decrease the risk of the impedance increase due to the accumulation of by-products during the cycling process, thereby better improving the cycling performance of the secondary battery.

In some embodiments of this application, the electrolyte further includes a boron-containing lithium salt, where the boron-containing lithium salt includes at least one of lithium tetrafluoroborate ($LiBF_4$), lithium bis(oxalato)borate ($C_4BLiO_8$, LiBOB for short), or lithium difluorooxalate borate ($C_2BF_2LiO_4$, LiODFB for short); and based on the total mass

of the electrolyte, a mass percentage W5 of the boron-containing lithium salt is 0.01% to 1%. For example, the mass percentage W5 of the boron-containing lithium salt may be 0.01%, 0.05%, 0.1%, 0.2%, 0.3%, 0.4%, 0.5%, 0.6%, 0.7%, 0.8%, 0.9%, and 1%, or in a range defined by any two of these values. In addition to the compound represented by formula I, the boron-containing lithium salt is also introduced into the electrolyte. The boron-containing lithium salt can promote the formation of a positive electrode interface film, reduce the probability of contact between a positive electrode active material and the electrolyte, thereby reducing the side reactions between the positive electrode active material and the electrolyte, so as to decrease the risk of the impedance increase due to the accumulation of by-products during the cycling process. As a result, the cycling performance of the secondary battery can be further improved. Simultaneously, by regulating the mass percentage W5 of the boron-containing lithium salt within the foregoing range, the cycling performance of the secondary battery is further improved, and higher economic efficiency is achieved.

In some embodiments of this application, the electrolyte may further include an electrolytic salt. A type of the electrolytic salt is not particularly limited in this application, provided that the objective of this application can be achieved. For example, the electrolytic salt may include, but is not limited to, at least one of $LiPF_6$, lithium bistrifluoromethanesulfonimide ($LiN(CF_3SO_2)_2$, LiTFSI for short), lithium bis(fluorosulfonyl)imide ($Li(N(SO_2F)_2)$, LiFSI for short), lithium hexafluorocesium oxide ($LiCsF_6$), lithium perchlorate ($LiClO_4$), lithium trifluoromethanesulfonate ($LiCF_3SO_3$), $LiCH_3SO_3$, $LiCF_3SO_3$, $LiC(SO_2CF_3)_3$, or $Li_2SiF_6$. A concentration of the electrolytic salt in the electrolyte is not particularly limited in this application, provided that the objectives of this application can be achieved. For example, based on a mass of the electrolyte, a mass percentage of the electrolytic salt is 10% to 15%.

In this application, the electrolyte further includes a non-aqueous solvent. The non-aqueous solvent is not particularly limited in this application, provided that the objectives of this application can be achieved. For example, the non-aqueous solvent may include, but is not limited to, at least one of a carbonate compound, a carboxylate compound, an ether compound, or another organic solvent.

The foregoing carbonate compound may include, but is not limited to, a linear carbonate compound. The foregoing linear carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), methyl ethyl carbonate (MEC), ethylene carbonate, propylene carbonate, butylene carbonate, or bis(2,2,2-trifluoroethyl) carbonate. The foregoing carboxylate compound may include, but is not limited to, at least one of methyl formate, methyl acetate, ethyl acetate, n-propyl acetate, n-butyl acetate, tert-butyl acetate, methyl propionate, ethyl propionate, propyl propionate, butyl propionate, methyl butyrate, ethyl butyrate, n-propyl butyrate, butyl butyrate, $\gamma$-butyrolactone, 2,2-difluoroethyl acetate, decanolide, butyrolactone, 2-ethyl fluoroacetate, 2,2-difluoroethyl acetate, ethyl trifluoroacetate, valerolactone, or caprolactone. The foregoing ether compound may include, but is not limited to, at least one of dimethoxyethane, diethylene glycol diethyl ether, tetraethylene glycol dimethyl ether, dibutyl ether, tetraglyme, diglyme, bis(2,2,2-trifluoroethyl) ether, 1,2-dimethoxyethane, 1,2-diethoxyethane, 1-ethoxy-1-methoxyethane, 2-methyltetrahydrofuran, or tetrahydrofuran. The another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. A percentage of the non-aqueous solvent in the electrolyte is not particularly limited in this application, provided that the objectives of this application can be achieved. For example, based on the mass of the electrolyte, a mass percentage of the non-aqueous solvent is 58% to 89%.

In some embodiments of this application, the electrolyte includes the compound represented by formula I, the compound represented by formula II, the electrolytic salt, and the non-aqueous solvent. The mass percentages of the compound represented by formula I, the compound represented by formula II, and the electrolytic salt are as described above. Based on a total mass of the electrolyte, the mass percentage of the non-aqueous solvent is 79% to 89%. The electrolyte includes the foregoing substances, which is conducive to improving the cycling performance of the secondary battery.

In some embodiments of this application, the electrolyte includes the compound represented by formula I, the compound represented by formula III, the electrolytic salt, and the non-aqueous solvent. The mass percentages of the compound represented by formula I, the compound represented by formula III, and the electrolytic salt are as described above. Based on the total mass of the electrolyte, the mass percentage of the non-aqueous solvent is 79% to 89%. The electrolyte includes the foregoing substances, which is conducive to improving the cycling performance of the secondary battery.

In some embodiments of this application, the electrolyte includes the compound represented by formula I, the compound represented by formula IV, the electrolytic salt, and the non-aqueous solvent. The mass percentages of the compound represented by formula I, the compound represented by formula IV, and the electrolytic salt are as described above. Based on the total mass of the electrolyte, the mass percentage of the non-aqueous solvent is 69% to 89%. The electrolyte includes the foregoing substances, which is conducive to improving the cycling performance of the secondary battery.

In some embodiments of this application, the electrolyte includes the compound represented by formula I, the boron-containing lithium salt, the electrolytic salt, and the non-aqueous solvent. The mass percentages of the compound

represented by formula I, the boron-containing lithium salt, and the electrolytic salt are as described above. Based on the total mass of the electrolyte, the mass percentage of the non-aqueous solvent is 83% to 89%. The electrolyte includes the foregoing substances, which is conducive to improving the cycling performance of the secondary battery.

In some embodiments of this application, the electrolyte includes the compound represented by formula I, the compound represented by formula II, the compound represented by formula III, the electrolytic salt, and the non-aqueous solvent. The mass percentages of the compound represented by formula I, the compound represented by formula II, the compound represented by formula III, and the electrolytic salt are as described above. Based on the total mass of the electrolyte, the mass percentage of the non-aqueous solvent is 74% to 89%. The electrolyte includes the foregoing substances, which is conducive to improving the cycling performance of the secondary battery.

In some embodiments of this application, the electrolyte includes the compound represented by formula I, the compound represented by formula II, the compound represented by formula IV, the electrolytic salt, and the non-aqueous solvent. The mass percentages of the compound represented by formula I, the compound represented by formula II, the compound represented by formula IV, and the electrolytic salt are as described above. Based on the total mass of the electrolyte, the mass percentage of the non-aqueous solvent is 64% to 89%. The electrolyte includes the foregoing substances, which is conducive to improving the cycling performance of the secondary battery.

In some embodiments of this application, the electrolyte includes the compound represented by formula I, the compound represented by formula II, the boron-containing lithium salt, the electrolytic salt, and the non-aqueous solvent. The mass percentages of the compound represented by formula I, the compound represented by formula II, the boron-containing lithium salt, and the electrolytic salt are as described above. Based on the total mass of the electrolyte, the mass percentage of the non-aqueous solvent is 78% to 89%. The electrolyte includes the foregoing substances, which is conducive to improving the cycling performance of the secondary battery.

In some embodiments of this application, the electrolyte includes the compound represented by formula I, the compound represented by formula III, the compound represented by formula IV, the electrolytic salt, and the non-aqueous solvent. The mass percentages of the compound represented by formula I, the compound represented by formula III, the compound represented by formula IV, and the electrolytic salt are as described above. Based on the total mass of the electrolyte, the mass percentage of the non-aqueous solvent is 64% to 89%. The electrolyte includes the foregoing substances, which is conducive to improving the cycling performance of the secondary battery.

In some embodiments of this application, the electrolyte includes the compound represented by formula I, the compound represented by formula III, the boron-containing lithium salt, the electrolytic salt, and the non-aqueous solvent. The mass percentages of the compound represented by formula I, the compound represented by formula III, the boron-containing lithium salt, and the electrolytic salt are as described above. Based on the total mass of the electrolyte, the mass percentage of the non-aqueous solvent is 78% to 89%. The electrolyte includes the foregoing substances, which is conducive to improving the cycling performance of the secondary battery.

In some embodiments of this application, the electrolyte includes the compound represented by formula I, the compound represented by formula IV, the boron-containing lithium salt, the electrolytic salt, and the non-aqueous solvent. The mass percentages of the compound represented by formula I, the compound represented by formula IV, the boron-containing lithium salt, and the electrolytic salt are as described above. Based on the total mass of the electrolyte, the mass percentage of the non-aqueous solvent is 68% to 89%. The electrolyte includes the foregoing substances, which is conducive to improving the cycling performance of the secondary battery.

In some embodiments of this application, the electrolyte includes the compound represented by formula I, the compound represented by formula II, the compound represented by formula III, the compound represented by formula IV, the electrolytic salt, and the non-aqueous solvent. The mass percentages of the compound represented by formula I, the compound represented by formula II, the compound represented by formula III, the compound represented by formula IV, and the electrolytic salt are as described above. Based on the total mass of the electrolyte, the mass percentage of the non-aqueous solvent is 64% to 89%. The electrolyte includes the foregoing substances, which is conducive to improving the cycling performance of the secondary battery.

In some embodiments of this application, the electrolyte includes the compound represented by formula I, the compound represented by formula II, the compound represented by formula III, the boron-containing lithium salt, the electrolytic salt, and the non-aqueous solvent. The mass percentages of the compound represented by formula I, the compound represented by formula II, the compound represented by formula III, the boron-containing lithium salt, and the electrolytic salt are as described above. Based on the total mass of the electrolyte, the mass percentage of the non-aqueous solvent is 73% to 89%. The electrolyte includes the foregoing substances, which is conducive to improving the cycling performance of the secondary battery.

In some embodiments of this application, the electrolyte includes the compound represented by formula I, the compound represented by formula III, the compound represented by formula IV, the boron-containing lithium salt, the electrolytic salt, and the non-aqueous solvent. The mass percentages of the compound represented by formula I, the compound represented by formula III, the compound represented by formula IV, the boron-containing lithium salt, and the electrolytic salt are as described above. Based on the total mass of the electrolyte, the mass percentage of the non-aqueous solvent is 78% to 89%. The electrolyte includes the foregoing substances, which is conducive to improving the cycling performance of the secondary battery.

In some embodiments of this application, the electrolyte includes the compound represented by formula I, the compound represented by formula II, the compound represented by formula III, the compound represented by formula IV, the boron-containing lithium salt, the electrolytic salt, and the non-aqueous solvent. The mass percentages of the compound represented by formula I, the compound represented by formula II, the compound represented by formula III, the compound represented by formula IV, the boron-containing lithium salt, and the electrolytic salt are as described above. Based on the total mass of the electrolyte, the mass percentage of the non-aqueous solvent is 58% to 89%. The electrolyte includes the foregoing substances, which is conducive to improving the cycling performance of the secondary battery.

A second aspect of this application provides a secondary battery, including the electrolyte according to any one of the foregoing embodiments. Therefore, the secondary battery provided in this application has good cycling performance.

In this application, the secondary battery further includes a positive electrode plate, and the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction, or on two surfaces of the positive electrode current collector in its thickness direction. It should be noted that the "surface" herein may be an entire region or a partial region of the surface of the positive electrode current collector. This is not particularly limited in this application, provided that the objectives of this application can be achieved.

The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The positive electrode material layer includes a positive electrode active material. The positive electrode active material is not particularly limited in this application, provided that the objectives of this application can be achieved. For example, the positive electrode active material may include, but is not limited to $LiCoO_2$, $LiNiO_2$, $LiMn_2O_4$, $LiCo_{1-y}MyO_2$, $LiNi_{1-y}MyO_2$, $LiMn_{2-y}MyO_4$, and $LiNi_xCo_yMn_zM_{1-x-y-z}O_2$, where M is selected from at least one of Fe, Co, Ni, Mn, Mg, Cu, Zn, Al, Sn, B, Ga, Cr, Sr, V, or Ti, and $0 \le y \le 1$, $0 \le x \le 1$, $0 \le z \le 1$, and $x+y+z \le 1$. For example, the positive electrode active material may include, but is not limited to, at least one of lithium cobaltate, lithium manganate, lithium iron phosphate, lithium manganese iron phosphate, nickel cobalt lithium manganate, lithium nickel cobalt aluminate, or lithium nickel manganate.

The positive electrode material layer may further include a conductive agent and a binder. Types of the conductive agent and the binder are not particularly limited in this application, provided that the objectives of this application can be achieved. For example, the conductive agent may include, but is not limited to, at least one of conductive carbon black (Super P), carbon nanotubes (CNTs), carbon fiber, flake graphite, graphene, a metal material, or a conductive polymer, where the conductive carbon black may include, but is not limited to, at least one of acetylene black or Ketjen black. The carbon nanotubes may include, but are not limited to single-walled carbon nanotubes and/or multi-walled carbon nanotubes. The foregoing carbon fiber may include, but is not limited to vapor grown carbon fiber (VGCF) and/or carbon nanofiber. The foregoing metal material may include, but is not limited to metal powder and/or metal fiber, and specifically, the metal may include, but is not limited to, at least one of copper, nickel, aluminum, or silver. The foregoing conductive polymer may include, but is not limited to, at least one of polyphenylene derivative, polyaniline, polythiophene, polyacetylene, or polypyrrole. The binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyimide, polyamideimide, styrene-butadiene rubber, or polyvinylidene fluoride. A mass ratio of the positive electrode active material, the conductive agent, and the binder in the positive electrode material layer is not particularly limited in this application, and persons skilled in the art can make selection based on actual needs, provided that the objectives of this application can be achieved. For example, a mass ratio of the positive electrode active material, the conductive agent, and the binder is (70 to 98):(1 to 15):(1 to 15).

Thicknesses of the positive electrode current collector and the positive electrode material layer are not particularly limited in this application, provided that the objectives of this application can be achieved. For example, the thickness of the positive electrode current collector is 5 μm to 20 μm, and the thickness of the positive electrode material layer is 30 μm to 120 μm.

Optionally, the positive electrode plate may further include a conductive layer, and the conductive layer is located between the positive electrode current collector and the positive electrode material layer. Composition of the conductive layer is not particularly limited, and the conductive layer may be a conductive layer commonly used in the art. The conductive layer includes a conductive agent and a binder. The conductive agent and the binder in the conductive layer are not particularly limited in this application, and may be, for example, at least one of the foregoing conductive agents and the

foregoing binders.

In this application, the secondary battery further includes a negative electrode plate, and the negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one surface of the negative electrode current collector in its thickness direction, or on two surfaces of the negative electrode current collector in its thickness direction. It should be noted that the "surface" herein may be an entire region or a partial region of the surface of the negative electrode current collector. This is not particularly limited in this application, provided that the objectives of this application can be achieved.

The negative electrode current collector is not particularly limited in this application, provided that the objectives of this application can be achieved. For example, the negative electrode current collector may include copper foil, copper alloy foil, nickel foil, stainless steel foil, titanium foil, nickel foam, copper foam, or a composite current collector. For example, a composite current collector may be a lithium-copper composite current collector, a carbon-copper composite current collector, a nickel-copper composite current collector, a titanium-copper composite current collector, or the like.

The negative electrode material layer includes a negative electrode active material. The negative electrode active material is not particularly limited in this application, provided that the objectives of this application can be achieved. For example, the negative electrode active material may include, but is not limited to, at least one of natural graphite, artificial graphite, mesocarbon microbeads, hard carbon, soft carbon, silicon, a silicon-carbon composite, Li-Sn alloy, Li-Sn-O alloy, Sn, SnO, $SnO_2$, spinel-structured lithiated $TiO_2$-$Li_4Ti_5O_{12}$, or Li-Al alloy.

In some embodiments of this application, the negative electrode material layer further includes a conductive agent and a binder. Types of the conductive agent and the binder are not particularly limited in this application, provided that the objectives of this application can be achieved. For example, the two may be at least one of the foregoing conductive agents and the foregoing binders. A mass ratio of the negative electrode active material, the conductive agent, and the binder in the negative electrode material layer is not particularly limited in this application, and persons skilled in the art can make selection based on actual needs, provided that the objectives of this application can be achieved. For example, a mass ratio of the negative electrode active material, the conductive agent, and the binder is (80 to 99):(0.5 to 10):(0.5 to 10).

Thickness of the negative electrode material layer is not particularly limited in this application, provided that the objectives of this application can be achieved. For example, the thickness of the negative electrode material layer is 30 μm to 120 μm. Thickness of the negative electrode current collector is not particularly limited in this application, provided that the objectives of this application can be achieved. For example, the thickness of the negative electrode current collector is 4 μm to 15 μm.

Optionally, the negative electrode plate may further include a conductive layer, and the conductive layer is located between the negative electrode current collector and the negative electrode material layer. Composition of the conductive layer is not particularly limited in this application, and the conductive layer may be a conductive layer commonly used in the art. For example, the conductive layer includes a conductive agent and a binder. The conductive agent and the binder in the conductive layer are not particularly limited in this application, and may be, for example, at least one of the foregoing conductive agents and the foregoing binders.

The secondary battery in this application further includes a separator. The separator is not particularly limited in this application, provided that the objectives of this application can be achieved. For example, the material of the separator may include, but is not limited to, at least one of polyethylene (PE) and polypropylene (PP)-based polyolefin (PO), polyester (for example, a polyethylene terephthalate (PET) film), cellulose, polyimide (PI), polyamide (PA), spandex, or aramid. The type of the separator may include at least one of a woven film, a nonwoven film, a microporous film, a composite film, a rolling film, or a spinning film.

In some embodiments of this application, the separator may include a substrate layer and a surface treatment layer. The substrate layer may be a non-woven fabric, film, or composite film having a porous structure, and material of the substrate layer may include at least one of polyethylene, polypropylene, polyethylene glycol terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film.

Optionally, the surface treatment layer is provided on at least one surface of the substrate layer, and the surface treatment layer may be a polymer layer, an inorganic substance layer, or a layer formed by mixing a polymer and an inorganic substance.

In some embodiments of this application, the inorganic substance layer includes inorganic particles and a binder. The inorganic particles are not particularly limited in this application. For example, the inorganic particles may include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and the binder, may be, for example, at least one of the foregoing binders. In some embodiments of this application, the polymer layer includes a polymer, and material of the polymer includes at least one of polyamide, polyacrylonitrile, acrylate polymer,

polyacrylic acid, polyacrylate salt, polyvinylpyrrolidone, polyvinyl ether, polyvinylidene fluoride, or poly(vinylidene fluoride-hexafluoropropylene).

Thickness of the separator is not particularly limited in this application, provided that the objectives of this application can be achieved. For example, the thickness of the separator may be 3 μm to 30 μm.

The secondary battery in this application further includes a housing for accommodating the positive electrode plate, the separator, the negative electrode plate, the electrolyte, and other known components of the secondary battery in the art. The other components are not limited in this application. The housing is not particularly limited in this application and may be any housing well known in the art, provided that the objectives of this application can be achieved. For example, the housing may be a hard-shell housing or a flexible housing. The material of the hard-shell housing may be metal. Type of the metal is not particularly limited in this application and may be any metal hard-shell housing known in the art, provided that the objectives of this application can be achieved. The flexible housing may be a metal-plastic film, such as an aluminum-plastic film, steel-plastic film, and the like.

A preparation process of the secondary battery of this application is well known to persons skilled in the art, and is not particularly limited in this application. For example, the preparation process of the secondary battery may include, but is not limited to the following steps: stacking a positive electrode plate, a separator, and a negative electrode plate in sequence, performing operations such as winding and folding as needed to obtain an electrode assembly with a winding structure, putting the electrode assembly into a housing, injecting an electrolyte into the housing, and sealing the housing to obtain a secondary battery. Alternatively, a positive electrode plate, a separator, and a negative electrode plate are stacked in sequence, four corners of the entire laminated structure are fixed with tapes to obtain an electrode assembly with a laminated structure, the electrode assembly is put into a housing, an electrolyte is injected into the housing, and the housing is sealed to obtain a secondary battery. In addition, if necessary, an overcurrent prevention element, a guide plate, and the like may be placed in the housing as required, so as to prevent pressure increase, overcharge, and over-discharge in the secondary battery.

In some embodiments of this application, the secondary battery of this application may include, but is not limited to a lithium metal secondary battery, a lithium-ion secondary battery (lithium-ion battery), a lithium polymer secondary battery, or a lithium-ion polymer secondary battery. In some embodiments of this application, the secondary battery includes a lithium-ion battery.

A third aspect of this application provides an electronic apparatus, including the secondary battery according to any one of the foregoing embodiments. Therefore, the electronic apparatus provided in this application has good use performance.

Type of the electronic apparatus is not particularly limited in this application, and the electronic apparatus may be any known electronic apparatus used in the prior art. In some embodiments of this application, the electronic apparatus may include, but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

## Example

The following describes some embodiments of this application more specifically by using examples and comparative examples. Various tests and evaluations are performed in the following methods. In addition, unless otherwise specified, "part" and "%" are based on mass.

<u>Test methods and device:</u>

25°C Cycling performance test:

Under a condition of 25°C, a lithium-ion battery was charged to 4.5 V at a constant current of 0.7C, then charged to 0.05C at a constant voltage of 4.5 V. Afterwards, the battery was discharged to 3.0 V at a constant current of 1C. This was a charging and discharging cycle. Then, with reference to the foregoing cycling steps, i.e., the battery was charged at 0.7C and discharged at 1C for 800 cycles. A discharge capacity of the third cycle was taken as the reference, and a capacity retention rate was used as an indicator to evaluate the cycling performance of the lithium-ion battery.

Cycling capacity retention rate=(discharge capacity of the 800th cycle/discharge capacity of the 3rd cycle)×100%

High-temperature storage performance test:

The lithium-ion battery was charged to 4.5 V at a constant current of 0.5C at 25°C, and then charged at a constant voltage of 4.5 V until the current reached 0.05C. The thickness of the lithium-ion battery was tested and recorded as d0, and its impedance was tested and recorded as the impedance before storage. The battery was then placed in an 85°C oven for 4 h, the thickness was monitored at this time, the thickness was recorded as d, and the impedance was tested and recorded as the impedance after 4 h of storage. The impedance before and after 4 h of storage was tested under the condition of 1 kHz. If a thickness swelling rate exceeded 50%, the tested was stopped.

Thickness swelling rate of after 4 h of high-temperature storage (%)=(d- d0)/d0×100%.

Storage impedance growth rate=impedance after 4 h of storage/impedance before storage×100%.

Example 1-1

<Preparation of positive electrode plate>

Positive electrode active material $LiCoO_2$, conductive agent Super P, and binder polyvinylidene fluoride were mixed at a mass ratio of 97.9:0.9:1.2, added with N-methylpyrrolidone (NMP) as a solvent, and prepared into a slurry with a solid content of 75wt%, and the slurry was uniformly mixed under vacuum stirring to obtain a positive electrode slurry. The positive electrode slurry was uniformly applied onto a surface of a positive electrode current collector aluminum foil with a thickness of 13 μm and dried at 120°C to obtain a positive electrode plate having a positive electrode material layer coated on one surface. The foregoing steps were then repeated on another surface of the aluminum foil to obtain a positive electrode plate coated with positive electrode material layers on two surfaces. The positive electrode plate was dried at 120°C and then cold pressed, followed by cutting and tab welding, to obtain a positive electrode plate of 74 mm×867 mm for later use. Compacted density of the positive electrode material layer was 4.15 g/cm$^3$.

<Preparation of negative electrode plate>

Negative electrode active material artificial graphite, binder styrene-butadiene rubber, and conductive agent acetylene black were mixed at a mass ratio of 97.4:1.4:1.2, added with deionized water as a solvent, and prepared into a slurry with a solid content of 45wt%, and the slurry was uniformly mixed using a vacuum mixer to obtain a negative electrode slurry. The negative electrode slurry was uniformly applied onto a surface of a negative electrode current collector copper foil with a thickness of 10 μm and dried at 120°C to obtain a negative electrode plate having a negative electrode material layer coated on one surface. The same steps were then repeated on another surface of the copper foil to obtain a negative electrode plate coated with negative electrode material layers on two surfaces. The negative electrode plate was dried at 120°C and then cold pressed, followed by cutting and tab welding, to obtain a negative electrode plate of 78 mm×875 mm for later use. Compacted density of the negative electrode material layer was 1.8 g/cm$^3$.

<Preparation of electrolyte>

In an environment with a water content less than 10 ppm, ethylene carbonate, propylene carbonate, diethyl carbonate, ethyl propionate, and propyl propionate were mixed at a mass ratio of 1:1:1:1:1 to obtain an organic solvent, and then electrolytic salt $LiPF_6$ and compound I-6 represented by formula I were added to the organic solvent and mixed uniformly to obtain an electrolyte. Based on a mass of the electrolyte, a mass percentage of the electrolytic salt was 12.5%, a mass percentage W1 of the compound represented by formula I was 0.08%, and the remaining was the organic solvent.

<Separator>

A polyethylene film with a thickness of 5 μm was used as a substrate layer of a separator. An aluminum oxide ceramic layer with a thickness of 2 μm was coated on one surface of the substrate layer, and then binder layers of 2.5 mg/1540.25 mm$^2$ were coated on the surface of the aluminum oxide ceramic layer and on another surface of the substrate layer, followed by drying to obtain the separator. The aluminum oxide ceramic layer contained aluminum oxide and polyvinylidene fluoride in a mass ratio of 95:5, the material of the binder layer was polyvinylidene fluoride, and the porosity of the separator was 39%.

<Preparation of lithium-ion battery>

The foregoing prepared positive electrode plate, separator, and negative electrode plate were sequentially

stacked so that the separator was located between the positive electrode plate and the negative electrode plate to provide separation, and a resulting stack was wound to obtain the electrode assembly. The electrode assembly was put into an aluminum-plastic film packaging bag, and was dehydrated at 80°C, and the prepared electrolyte was injected, followed by processes such as vacuum packaging, standing, formation, degassing, and trimming, to obtain a lithium-ion battery. An upper limit voltage for formation was 4.15 V, a formation temperature was 70°C, and a standing time in formation was 2 h.

Example 1-2 to Example 1-10

These examples were the same as Example 1-1 except that the related preparation parameters were adjusted according to Table 1. When a mass percentage W1 of the compound represented by formula I changed, the content of the organic solvent changed accordingly while the mass ratio of electrolytic salt, ethylene carbonate, propylene carbonate, diethyl carbonate, ethyl propionate, and propyl propionate remained unchanged.

Example 2-1 to Example 2-9

These examples were the same as Example 1-3 except that the compound represented by formula II was added according to Table 2 in <Preparation of electrolyte>, and that the related preparation parameters were adjusted according to Table 2. When the mass percentage W1 of the compound represented by formula I and/or a mass percentage W2 of the compound represented by formula II changed, the content of the organic solvent changed accordingly while the mass ratio of electrolytic salt, ethylene carbonate, propylene carbonate, diethyl carbonate, ethyl propionate, and propyl propionate remained unchanged.

Example 3-1 to Example 3-31

These examples were the same as Example 1-3 except that at least one of the compound represented by formula II, the compound represented by formula III, the compound represented by formula IV, and the boron-containing lithium salt was added according to Table 3 in <Preparation of electrolyte>, and that the related preparation parameters were adjusted according to Table 3. When at least one of the mass percentage W1 of the compound represented by formula I, the mass percentage W2 of the compound represented by formula II, a mass percentage W3 of the compound represented by formula III, a mass percentage W4 of the compound represented by formula IV, and a mass percentage W5 of the boron-containing lithium salt changed, the content of the organic solvent changed accordingly while the mass ratio of electrolytic salt, ethylene carbonate, propylene carbonate, diethyl carbonate, ethyl propionate, and propyl propionate remained unchanged.

Comparative example 1

The example was the same as Example 1-1 except that the compound represented by formula I was not added in <Preparation of electrolyte>. When the compound represented by formula I was not added, the content of the organic solvent changed accordingly while the mass ratio of electrolytic salt, ethylene carbonate, propylene carbonate, diethyl carbonate, ethyl propionate, and propyl propionate remained unchanged.

Preparation parameters and performance of the examples and comparative examples were shown in Table 1 to Table 3.

**Table 1**

| | Compound represented by formula I | W1 (%) | Cycling capacity retention rate (%) | Storage impedance growth rate (%) |
|---|---|---|---|---|
| Example 1-1 | I-6 | 0.08 | 63.90 | 46.70 |
| Example 1-2 | I-6 | 0.3 | 68.20 | 43.90 |
| Example 1-3 | I-6 | 0.5 | 69.90 | 41.20 |
| Example 1-4 | I-6 | 0.7 | 70.80 | 42.20 |
| Example 1-5 | I-6 | 1 | 67.90 | 46.30 |
| Example 1-6 | I-6 | 0.05 | 63.20 | 47.50 |
| Example 1-7 | I-6 | 1.5 | 61.50 | 47.80 |
| Example 1-8 | I-7 | 0.3 | 69.10 | 42.70 |

(continued)

| | Compound represented by formula I | W1 (%) | Cycling capacity retention rate (%) | Storage impedance growth rate (%) |
|---|---|---|---|---|
| Example 1-9 | I-15 | 0.3 | 69.60 | 42.00 |
| Example 1-10 | I-6 | 0.1 | 68.70 | 43.10 |
| | I-7 | 0.2 | | |
| Comparative example 1 | / | / | / | 48.20 |
| Note: "/" in Table 1 means that a corresponding parameter or performance does not exist. | | | | |

From Example 1-1 to Example 1-10 and Comparative example 1, it can be seen that when the compound represented by formula I is introduced into the electrolyte, the resulting lithium-ion battery has a high cycling capacity retention rate at 25°C and a low high-temperature storage impedance growth rate. This indicates that the lithium-ion battery in the examples has better cycling performance and high-temperature storage performance. In Comparative example 1, the lithium-ion battery failed to operate normally before reaching 800 cycles, resulting in the absence of cycling capacity retention rate data. This further indicates that the lithium-ion battery in some embodiments of this application has better cycling performance.

The content of the compound represented by formula I generally affect the cycling performance and high-temperature storage performance of lithium-ion batteries. From Example 1-1 to Example 1-7, it can be seen that when the mass percentage W1 of the compound represented by formula I is within the range specified in this application, the resulting lithium-ion battery has a high cycling capacity retention rate at 25°C and a low high-temperature storage impedance growth rate. This indicates that the lithium-ion battery has better cycling performance and high-temperature storage performance. From Example 1-2, Example 1-8 to Example 1-10, it can be seen that when the type of the compound represented by formula I is within the range specified in this application, the resulting lithium-ion battery has a high cycling capacity retention rate at 25°C and a low high-temperature storage impedance growth rate. This indicates that the lithium-ion battery has good cycling performance and high-temperature storage performance.

**Table 2**

| | W1 (%) | Compound represented by formula II | W2 (%) | $W_I$ | Cycling capacity retention rate (%) | Storage impedance growth rate (%) | Thickness swelling rate (%) |
|---|---|---|---|---|---|---|---|
| Example 1-3 | 0.5 | / | / | / | 69.90 | 41.20 | 42.30 |
| Example 2-1 | 0.5 | II-3 | 0.1 | 5 | 70.50 | 40.60 | 40.60 |
| Example 2-2 | 0.5 | II-3 | 0.5 | 1 | 71.50 | 37.20 | 38.70 |
| Example 2-3 | 0.5 | II-3 | 1 | 0.5 | 75.30 | 32.00 | 28.10 |
| Example 2-4 | 0.5 | II-3 | 2 | 0.25 | 75.70 | 29.30 | 19.60 |
| Example 2-5 | 0.5 | II-3 | 1 | 0.25 | 76.20 | 29.90 | 19.30 |
| | | II-1 | 1 | | | | |
| Example 2-6 | 0.25 | II-3 | 2 | 0.05 | 79.70 | 22.60 | 8.20 |
| | | II-1 | 2 | | | | |
| | | II-14 | 1 | | | | |
| | 0.5 | II-3 | 1 | 0.25 | 78.50 | 23.70 | 12.90 |
| Example 2-7 | | II-15 | 1 | | | | |
| Example 2-8 | 0.5 | II-3 | 1 | 0.25 | 81.20 | 22.50 | 10.70 |
| | | II-19 | 1 | | | | |
| Example 2-9 | 0.5 | II-1 | 0.05 | 10 | 70.10 | 40.90 | 41.80 |
| Note: "/" in Table 2 means that a corresponding parameter or performance does not exist. | | | | | | | |

From Example 1-3, Example 2-1 to Example 2-9, it can be seen that when the compound represented by formula II is introduced into the electrolyte on the basis of introducing the compound represented by formula I into the electrolyte, the resulting lithium-ion battery has a high cycling capacity retention rate at 25°C, a low high-temperature storage impedance growth rate, and a low thickness swelling rate. This indicates that the cycling performance and high-temperature storage performance of the lithium-ion battery are further improved.

The mass percentage W2, type, and ratio $W_I$ of the compound represented by formula II generally affect the cycling performance and high-temperature storage performance of the lithium-ion battery. From Example 2-1 to Example 2-9, it can be seen that the mass percentage W2, type, and ratio $W_I$ of the compound represented by formula II are within the range specified in this application, the resulting lithium-ion battery has a high cycling capacity retention rate at 25°C, a low high-temperature storage impedance growth rate, and a low thickness swelling rate. This indicates that the lithium-ion battery has good cycling performance and high-temperature storage performance.

Table 3

| | Compound represented by formula II | W2 (%) | Compound represented by formula III | W3 (%) | Compound represented by formula IV | W4 (%) | Boron-containing lithium salt | W5 (%) | Cycling capacity retention rate (%) | Storage impedance growth rate (%) |
|---|---|---|---|---|---|---|---|---|---|---|
| Example 1-3 | / | / | / | / | / | / | / | / | 69.90 | 41.20 |
| Example 3-1 | / | / | III-5 | 0.08 | / | / | / | / | 70.30 | 41.00 |
| Example 3-2 | / | / | III-5 | 1 | / | / | / | / | 71.20 | 37.20 |
| Example 3-3 | / | / | III-1 | 2 | / | / | / | / | 71.90 | 36.50 |
| Example 3-4 | / | / | III-1 | 4 | / | / | / | / | 72.50 | 32.30 |
| Example 3-5 | / | / | III-1 | 4 | / | / | / | / | 73.80 | 29.30 |
| | | | III-5 | 1 | | | | | | |
| Example 3-6 | / | / | III-6 | 1 | / | / | / | / | 70.90 | 39.70 |
| Example 3-7 | / | / | III-5 | 0.05 | / | / | / | / | 70.10 | 41.00 |
| Example 3-8 | / | / | / | / | IV-2 | 0.1 | / | / | 70.10 | 39.60 |
| Example 3-9 | / | / | / | / | IV-2 | 0.5 | / | / | 71.80 | 35.90 |
| Example 3-10 | / | / | / | / | IV-2 | 1 | / | / | 72.70 | 36.50 |
| Example 3-11 | / | / | / | / | IV-1 | 5 | / | / | 71.50 | 34.30 |
| Example 3-12 | / | / | / | / | IV-1 | 10 | / | / | 71.00 | 32.80 |
| Example 3-13 | / | / | / | / | IV-1 | 15 | / | / | 70.20 | 32.10 |
| Example 3-14 | / | / | / | / | IV-1 | 5 | / | / | 74.30 | 30.20 |
| | | | | | IV-2 | 1 | / | | | |
| Example 3-15 | / | / | / | / | IV-2 | 0.05 | / | / | 70.00 | 40.50 |
| Example 3-16 | / | / | / | / | / | / | LiBOB | 0.01 | 70.00 | 40.90 |
| Example 3-17 | / | / | / | / | / | / | LiBOB | 0.1 | 70.50 | 39.70 |
| Example 3-18 | / | / | / | / | / | / | LiBOB | 0.3 | 71.80 | 36.50 |
| Example 3-19 | / | / | / | / | / | / | LiBOB | 0.5 | 74.90 | 34.90 |
| Example 3-20 | / | / | / | / | / | / | LiBOB | 1 | 76.80 | 34.00 |
| Example 3-21 | / | / | / | / | / | / | LiBF4 | 0.5 | 70.50 | 38.30 |

(continued)

| | Compound represented by formula II | W2 (%) | Compound represented by formula III | W3 (%) | Compound represented by formula IV | W4 (%) | Boron-containing lithium salt | W5 (%) | Cycling capacity retention rate (%) | Storage impedance growth rate (%) |
|---|---|---|---|---|---|---|---|---|---|---|
| Example 3-22 | II-3 | 2 | III-5 | 1 | / | / | / | / | 77.30 | 28.10 |
| Example 3-23 | II-3 | 2 | / | / | IV-2 | 1 | / | / | 79.30 | 27.20 |
| Example 3-24 | II-3 | 2 | / | / | / | / | LiBOB | 0.5 | 80.90 | 26.30 |
| Example 3-25 | / | / | III-5 | 1 | IV-2 | 1 | / | / | 75.20 | 33.70 |
| Example 3-26 | / | / | / | / | IV-2 | 1 | LiBOB | 0.5 | 77.50 | 32.50 |
| Example 3-27 | / | / | III-5 | 1 | / | / | LiBOB | 0.5 | 75.60 | 32.90 |
| Example 3-28 | II-3 | 2 | III-5 | 1 | IV-2 | 1 | / | / | 80.50 | 26.20 |
| Example 3-29 | II-3 | 2 | III-5 | 1 | / | / | LiBOB | 0.5 | 82.70 | 25.90 |
| Example 3-30 | / | / | III-5 | 1 | IV-2 | 1 | LiBOB | 0.5 | 79.20 | 30.20 |
| Example 3-31 | II-3 | 2 | III-5 | 1 | IV-2 | 1 | LiBOB | 0.5 | 85.60 | 23.70 |
| Note: "/" in Table 3 means that a corresponding parameter or performance does not exist. | | | | | | | | | | |

From Example 1-3, Example 3-1 to Example 3-7, it can be seen that when the compound represented by formula III is introduced into the electrolyte on the basis of introducing the compound represented by formula I into the electrolyte, the resulting lithium-ion battery has a high cycling capacity retention rate at 25°C and a low high-temperature storage impedance growth rate. This indicates that the cycling performance and high-temperature storage performance of the lithium-ion battery are further improved. From Example 3-1 to Example 3-7, it can be seen that when the mass percentage W3 and type of the compound represented by formula III are within the range specified in this application, the resulting lithium-ion battery has a high cycling capacity retention rate at 25°C and a low high-temperature storage impedance growth rate. This indicates that the lithium-ion battery has good cycling performance and high-temperature storage performance.

From Example 1-3, Example 3-8 to Example 3-15, it can be seen that when the compound represented by formula IV is introduced into the electrolyte on the basis of introducing the compound represented by formula I into the electrolyte, the resulting lithium-ion battery has a high cycling capacity retention rate at 25°C and a low high-temperature storage impedance growth rate. This indicates that the cycling performance and high-temperature storage performance of the lithium-ion battery are further improved. From Example 3-8 to Example 3-15, it can be seen that when the mass percentage W4 and type of the compound represented by formula IV are within the range specified in this application, the resulting lithium-ion battery has a high cycling capacity retention rate at 25°C and a low high-temperature storage impedance growth rate. This indicates that the lithium-ion battery has good cycling performance and high-temperature storage performance.

From Example 1-3, Example 3-16 to Example 3-21, it can be seen that when the boron-containing lithium salt is introduced into the electrolyte on the basis of introducing the compound represented by formula I into the electrolyte, the resulting lithium-ion battery has a high cycling capacity retention rate at 25°C and a low high-temperature storage impedance growth rate. This indicates that the cycling performance and high-temperature storage performance of the lithium-ion battery are further improved. From Example 3-16 to Example 3-21, it can be seen that when the mass percentage W5 and type of the boron-containing lithium salt are within the range specified in this application, the resulting lithium-ion battery has a high cycling capacity retention rate at 25°C and a low high-temperature storage impedance growth rate. This indicates that the lithium-ion battery has good cycling performance and high-temperature storage performance.

From Example 1-3, Example 3-22 to Example 3-31, it can be seen that when at least two of the compound represented by formula II, the compound represented by formula III, the compound represented by formula IV, and the boron-containing lithium salt are introduced into the electrolyte on the basis of introducing the compound represented by formula I into the electrolyte, the resulting lithium-ion battery has a high cycling capacity retention rate at 25°C and a low high-temperature storage impedance growth rate. This indicates that the cycling performance and high-temperature storage performance of the lithium-ion battery are further improved, and the foregoing compounds have good additivity.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. An electrolyte, comprising a compound represented by formula I:

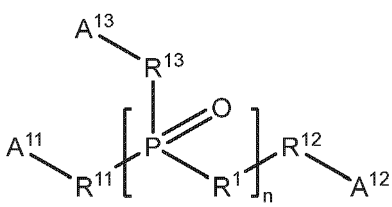

formula I,

**characterized in that**, the compound represented by formula I comprises at least one pyridyl group; n is selected from 1 or 2; $A^{11}$, $A^{12}$, and $A^{13}$ are each independently selected from hydrogen, substituted or unsubstituted $C_1$-$C_5$ alkyl group, substituted or unsubstituted $C_6$-$C_{10}$ aryl group, and substituted or unsubstituted pyridyl group; $R^1$, $R^{11}$, $R^{12}$, and $R^{13}$ are each independently selected from a covalent single bond, substituted or unsubstituted $C_1$-$C_6$ alkylene group; when substituted, each substituent is independently selected from halogen or $C_1$-$C_3$ alkyl group; and when n is 2, the two $R^1$are same or different, the two $R^{13}$, are same or different, and the two $A^{13}$ are same or different.

2. The electrolyte according to claim 1, **characterized in that**, the compound represented by formula I comprises at least one of the following compounds:

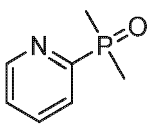
I-1,
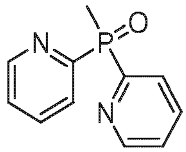
I-2,
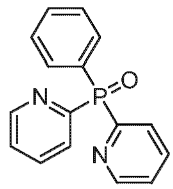
I-3,
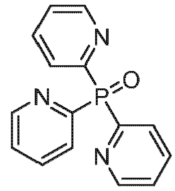
I-4,
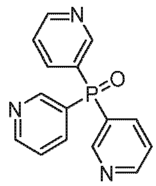
I-5,
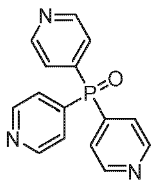
I-6,
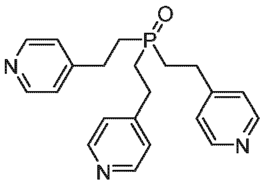
I-7,
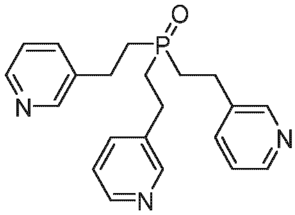
I-8,
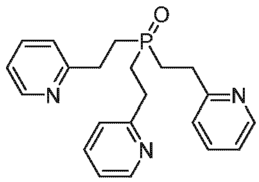
I-9,
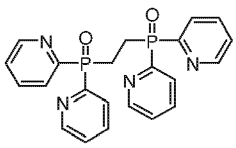
I-10,
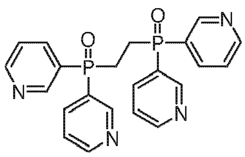
I-11,
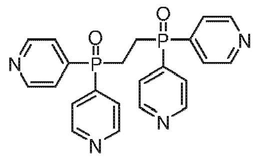
I-12,
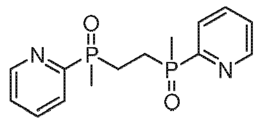
I-13,
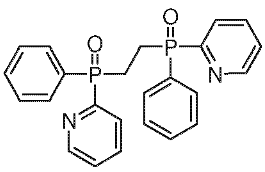
I-14,
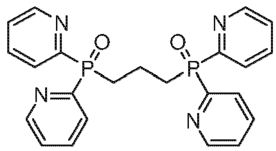
I-15,
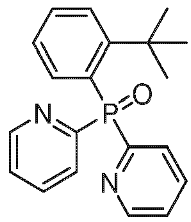
I-16,
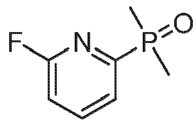
or I-17.

3. The electrolyte according to claim 1, **characterized in that**, based on a mass of the electrolyte, a mass percentage of the compound represented by formula I is 0.08% to 1%.

4. The electrolyte according to claim 1, **characterized in that**, the electrolyte further comprises a compound represented by formula II:

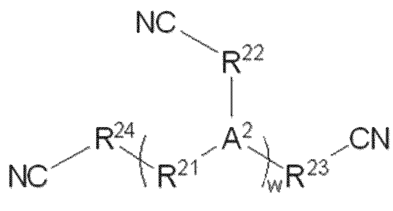
formula II,

wherein w is an integer selected from 0 to 4; $A^2$ is selected from

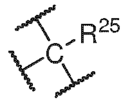 ,

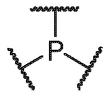 , or 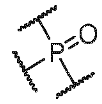 ; ]

$R^{21}$, $R^{22}$, $R^{23}$, and $R^{24}$ are each independently selected from a covalent single bond, $C_1$-$C_5$ alkylene group, $C_2$-$C_4$ alkenylene group, or

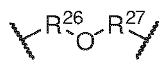 ;

$R^{25}$ is selected from hydrogen, cyano, unsubstituted or cyano-substituted $C_1$-$C_3$ alkyl group; $R^{26}$ and $R^{27}$ are each independently selected from a covalent single bond or $C_1$-$C_3$ alkylene group;

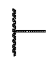

represents a binding site with an adjacent atom; and when w is an integer selected from 2 to 4, each $A^2$ is same or different, each $R^{21}$ is same or different, and each $R^{22}$ is same or different; and
based on a total mass of the electrolyte, a mass percentage of the compound represented by formula II is 0.1% to 5%.

**5.** The electrolyte according to claim 4, **characterized in that**, the compound represented by formula II comprises at least one of the following compounds:

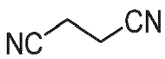
II–1,

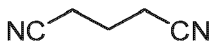
II–2,

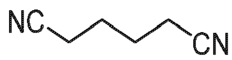
II–3,

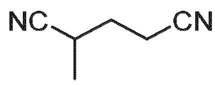
II–4,

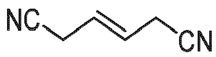
II–5,

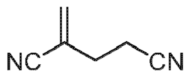
II–6,

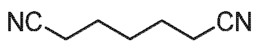
II–7,

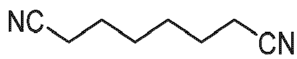
II–8,

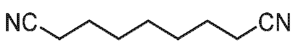
II–9,

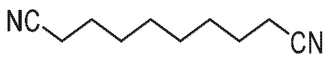
II–10,

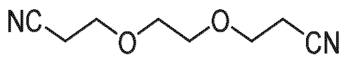
II–11,

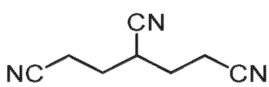
II–12,

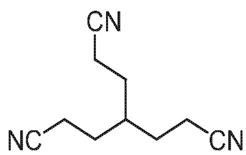
II–13,

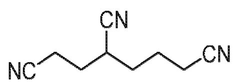
II–14,

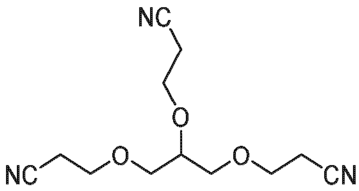
II–15,
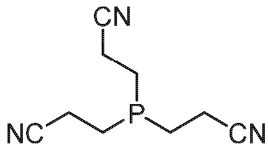
II–16,
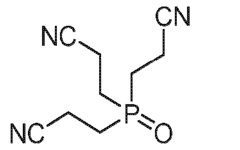
II–17,

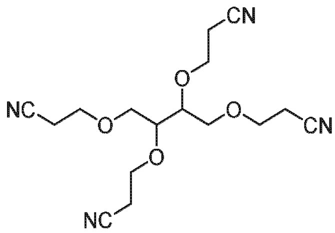
II–18,
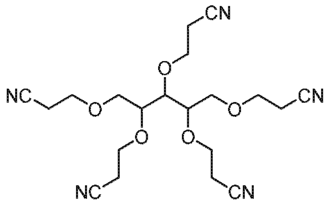
II–19,
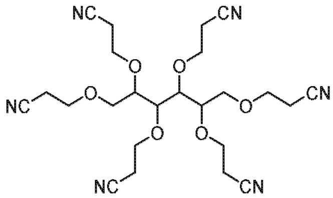
II–20,

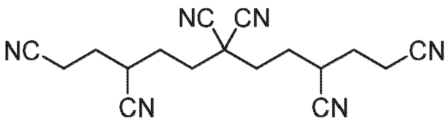
II–21,
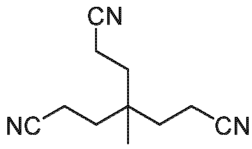
II–22,
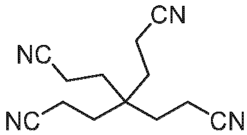
or II–23.

6. The electrolyte according to claim 4 or 5, **characterized in that**, a ratio of a mass percentage of the compound represented by formula I to the mass percentage of the compound represented by formula II is $W_I$, $0.016 \leq W_I \leq 1$.

7. The electrolyte according to claim 4 or 5, **characterized in that**, a ratio of a mass percentage of the compound represented by formula I to the mass percentage of the compound represented by formula II is $W_I$, $0.05 \leq W_I \leq 1$.

8. The electrolyte according to claim 1, **characterized in that**, the electrolyte further comprises a compound represented by formula III:

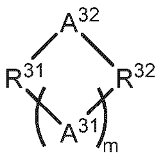
formula III,

wherein $A^{31}$ and $A^{32}$ are each independently selected from

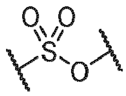

or

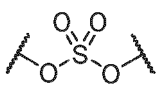
;

and

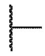

represents a binding site with an adjacent atom;

m is selected from 0 or 1; $R^{31}$ and $R^{32}$ are each independently selected from a covalent single bond, halogen-substituted or unsubstituted $C_1$-$C_5$ alkylene group or halogen-substituted or unsubstituted $C_2$-$C_5$ alkenylene group; and

based on a total mass of the electrolyte, a mass percentage of the compound represented by formula III is 0.1% to 5%.

9. The electrolyte according to claim 8, **characterized in that**, the compound represented by formula III comprises at least one of the following compounds:

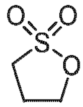
III–1,
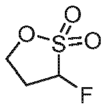
III–2,
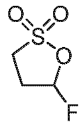
III–3,
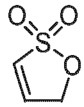
III–4,
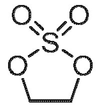
III–5,
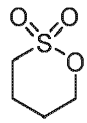
III–6,
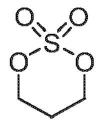
III–7,

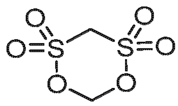
III–8,
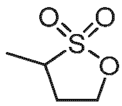
III–9,
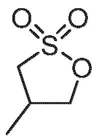
III–10,
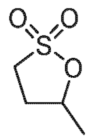
III–11,
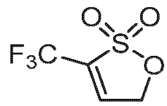
or III–12.

10. The electrolyte according to claim 1, **characterized in that**, the electrolyte further comprises a compound represented by formula IV:

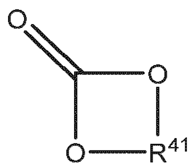
formula IV,

wherein $R^{41}$ is selected from substituted $C_1$-$C_6$ alkylene group, substituted or unsubstituted $C_2$-$C_6$ alkenylene group; and when substituted, the substituent is selected from an F atom or $C_2$-$C_6$ alkenyl group; and

based on a total mass of the electrolyte, a mass percentage of the compound represented by formula IV is 0.1% to 15%.

11. The electrolyte according to claim 10, **characterized in that**, the compound represented by formula IV comprises at least one of the following compounds:

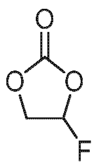
IV–1,
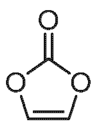
IV–2,
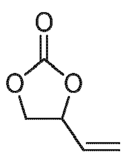
IV–3,
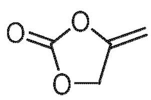
IV–4,
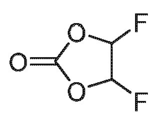
IV–5,

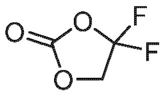 IV–6, 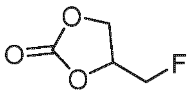 IV–7, 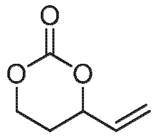 IV–8, 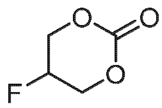 IV–9, 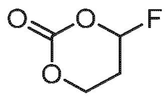 or IV–10.

**12.** The electrolyte according to claim 1, **characterized in that**, the electrolyte further comprises a boron-containing lithium salt; the boron-containing lithium salt comprising at least one of lithium tetrafluoroborate, lithium bis(oxalato) borate, or lithium difluorooxalate borate; and based on a total mass of the electrolyte, a mass percentage of the boron-containing lithium salt being 0.01% to 1%.

**13.** A secondary battery, comprising the electrolyte according to any one of claims 1 to 12.

**14.** An electronic apparatus, comprising the secondary battery according to claim 13.

Europäisches Patentamt
European Patent Office
Office européen des brevets

# EUROPEAN SEARCH REPORT

Application Number
EP 25 18 3959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | KR 2023 0131726 A (LG ENERGY SOLUTION LTD [KR]) 14 September 2023 (2023-09-14)<br>* claim 4, formulas 1-3 and 1-4; claim 9; par. 186 *<br>----- | 1,10-13<br>4-9,14<br>2,3 | INV.<br>H01M10/0525<br>H01M10/0567<br>H01M10/0568<br>H01M10/0569 |
| X | Semen& Delphine ET AL: "Alkylation of Phosphine PH3 Generated from Red Phosphorus",<br>Tetrahedron Letters,<br>16 May 1994 (1994-05-16), pages 3297-3300, XP093327304,<br>Retrieved from the Internet:<br>URL:https://www.sciencedirect.com/science/article/pii/S0040403900768894?via%3Dihub<br>* Page 3298, lines 1-17 from the bottom *<br>----- | 1 | |
| Y | CN 118 099 517 A (NINGDE AMPEREX TECHNOLOGY LTD) 28 May 2024 (2024-05-28)<br>* claims 4, 5, 6, 10 *<br>----- | 4-9,14 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 21 October 2025 | Bettio, Andrea |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 3959

This annex lists the patent family members relating to the patent documents cited in the above-mentioned European search report. The members are as contained in the European Patent Office EDP file on
The European Patent Office is in no way liable for these particulars which are merely given for the purpose of information.

21-10-2025

| Patent document cited in search report | Publication date | Patent family member(s) | Publication date |
|---|---|---|---|
| KR 20230131726 A | 14-09-2023 | NONE | |
| CN 118099517 A | 28-05-2024 | NONE | |

EPO FORM P0459

For more details about this annex : see Official Journal of the European Patent Office, No. 12/82